# FASCICULE DE BREVET EUROPEEN

(11) **EP 1 376 211 B1**
(45) Date de publication et mention de la délivrance du brevet: **21.09.2005**
(21) Numéro de dépôt: 02077506.0
(22) Date de dépôt: 21.06.2002
(51) Int. Cl.: G02F 1/1341, G02F 1/1347, G02F 1/1333, H01G 9/20

(54) **Procédé de fabrication d'un lot de cellules multicouches telles que des cellules d'affichage à cristaux liquides, ou des cellules photovoltaiques électrochimiques**
Verfahren zur Herstellung eines Satzes von Multischichtzellen wie Flüssigkristallanzeigezellen oder elektrochemische photovoltaische Zellen
Method of manufacturing a batch of multi-layer cells like liquid crystal display cells or electrochemical photovoltaic cells

(43) Date de publication de la demande: 02.01.2004
(73) Titulaire: ASULAB S.A., 2074 Marin (CH)
(72) Inventeur: Rey-Mermet, Gilles, 2525 Le Landeron (CH); Klappert, Rolf, 2000 Neuchâtel (CH); Blanckaert, Nicolas, 2000 Neuchâtel (CH)
(74) Mandataire: Ravenel, Thierry Gérard Louis

(56) Documents cités:
- GB-A- 2 320 356
- US-A- 6 099 672
- US-A1- 2002 014 303
- PATENT ABSTRACTS OF JAPAN vol. 006, no. 265 (P-165), 24 décembre 1982 (1982-12-24) -& JP 57 161724 A (NIPPON DENKI KK), 5 octobre 1982 (1982-10-05)
- PATENT ABSTRACTS OF JAPAN vol. 005, no. 017 (P-047), 31 janvier 1981 (1981-01-31) -& JP 55 146415 A (HITACHI LTD), 14 novembre 1980 (1980-11-14)

## Description

La présente invention concerne le domaine des cellules multicouches, c'est-à-dire des cellules comprenant une pluralité de substrats superposés et réunis deux à deux par des cadres de scellement qui délimitent des volumes étanches pour le confinement d'un milieu dont les propriétés optiques sont susceptibles de changer sous l'effet de l'application d'une tension électrique, ou dont les propriétés électriques peuvent être modifiées sous l'effet d'une lumière incidente.

Dans le cas le plus simple, les cellules électro-optiques telles que les cellules à cristaux liquides, ou les cellules photovoltaïques électrochimiques comprennent deux substrats seulement, à savoir un substrat avant transparent et un substrat arrière également transparent ou non. On réalise sur ces deux substrats un réseau d'éléments conducteurs formant des électrodes et des pistes conductrices reliant ces électrodes à un circuit d'alimentation ou de commande. Les deux substrats sont réunis entre eux au moyen d'un cadre de scellement qui définit un volume étanche dans lequel est emprisonné le milieu actif.

Les cellules électro-optiques sont des cellules d'affichage dont les caractéristiques optiques des cristaux liquides emprisonnés entre les deux substrats de telles cellules peuvent être modifiées par des tensions de commande appliquées aux électrodes. Quant aux cellules photovoltaïques électrochimiques, elles sont capables de convertir la lumière visible en électricité en exploitant l'effet photo-électrique qui apparaît dans un substrat semi-conducteur sensibilisé par un colorant.

Dans le cas simple où les cellules ne comprennent que deux substrats et une couche d'agent actif emprisonnée entre les deux, le remplissage des cellules ne pose pas de problème particulier. On ménage simplement dans les cadres de scellement une ouverture de remplissage par laquelle l'agent actif peut pénétrer dans le volume étanche délimité par ledit cadre de scellement. Le remplissage s'opère habituellement de la façon suivante : après avoir disposé la cellule et le cristal liquide dans une chambre à vide, on fait le vide dans le volume de confinement de la cellule, puis on plonge le côté de la cellule où se trouve l'ouverture de remplissage dans un récipient contenant l'agent actif. L'agent actif pénètre par capillarité, via le trou de remplissage, dans la cellule, aidé en cela par une augmentation de la pression dans la chambre. Lorsque le remplissage de la cellule est achevé, il ne reste plus qu'à sceller hermétiquement l'ouverture de remplissage.

Une autre solution connue consiste à percer un trou de remplissage dans l'un des substrats de la cellule. Après avoir fait le vide, on injecte par ce trou l'agent actif dans la cellule et, après que la cellule soit remplie, on obture ledit trou. Cette seconde solution s'avère particulièrement avantageuse dans la mesure où elle permet un remplissage des cellules par le dessus, ce qui permet de travailler avec des ensembles de cellules encore en lots.

Quelle que soit la solution retenue pour procéder au remplissage des cellules à un seul niveau, on comprend bien que cette étape de la fabrication desdites cellules ne pose pas de problème majeur, en particulier en raison du fait que l'on n'utilise qu'un seul type d'agent actif. Par conséquent, même si l'agent actif, par exemple un cristal liquide, déborde du trou de remplissage et vient mouiller le pourtour de la cellule ou des substrats, il ne risque pas d'être pollué par un autre cristal liquide ou de détériorer une structure de la cellule déjà déposée.

Il n'en va par contre pas de même avec les cellules à plusieurs niveaux qui contiennent des agents actifs différents. Dans ce cas, les problèmes mentionnés ci-dessus deviennent vite importants et les risques de polluer l'un des agents actifs tel qu'un cristal liquide avec un autre cristal liquide sont assez élevés.

Imaginons en effet le cas, par exemple, d'une cellule d'affichage à cristaux liquides à deux niveaux comprenant deux couches de cristaux liquides produisant des effets optiques différents. Une telle cellule peut être classiquement formée d'un substrat intermédiaire qui porte des électrodes sur ses deux faces et de deux substrats supérieur et inférieur disposés de part et d'autre du substrat intermédiaire. Chaque cellule est ainsi constituée par la réunion du substrat supérieur, respectivement inférieur, avec le substrat intermédiaire au moyen de deux cadres de scellement qui délimitent chacun une cavité étanche pour le confinement des cristaux liquides. Ces cadres de scellement comportent chacun un trou de remplissage, ces trous de remplissage étant préférentiellement ménagés sur un même côté de la cellule. Pour remplir la cellule, on applique ensuite deux tampons en mousse imbibés chacun du cristal liquide voulu contre les ouvertures de remplissage, puis on fait pénétrer les différents cristaux liquides comme décrit plus haut dans leurs cavités respectives. Après avoir retiré les tampons, il suffit de sceller hermétiquement les ouvertures de remplissage.

Le procédé décrit ci-dessus permet avantageusement de remplir simultanément les différents niveaux d'une cellule multicouche avec des cristaux liquides dont les propriétés optiques peuvent différer d'une couche à la couche suivante. Un tel procédé trouve néanmoins rapidement ses limites. En effet, pour la mise en oeuvre de ce procédé, il est toujours nécessaire de pouvoir disposer d'au moins un côté de la cellule dépourvu de toute piste conductrice dans la mesure où ces pistes conductrices, qui servent à relier les électrodes de la cellule à un circuit extérieur de commande, sont habituellement ménagées le long d'un bord de ladite cellule où un substrat fait saillie par rapport au substrat qui le suit. Ainsi, il serait difficile d'accéder à un trou de remplissage qui serait ménagé dans le cadre de scellement en un endroit où apparaissent les pistes de connexion. Or, plus une cellule comporte de niveaux, plus le nombre de ses électrodes et donc de ses pistes de connexion augmente. On peut donc se retrouver dans le cas où des pistes de connexion débouchent le long de tous les côtés d'une cellule, de sorte que la technique de remplissage décrite ci-dessus ne peut plus être utilisée. En outre, dans le meilleur des cas, cette technique ne permet de remplir qu'une seule cellule à la fois, ce qui est long, fastidieux et renchérit sensiblement les coûts de fabrication de telles cellules. Un procédé de fabrication d'une pluralité de cellules multicouche est connu de US2002/0014303.

La présente invention a pour but de remédier aux problèmes susmentionnés ainsi qu'à d'autres encore en procurant un procédé de fabrication de cellules multicouches telles que des cellules à cristal liquide qui rende le remplissage de ces cellules à la fois simple et rapide.

A cet effet, la présente invention concerne un procédé de fabrication d'une pluralité de cellules multicouches, notamment de cellules d'affichage à cristaux liquides, ou de cellules photovoltaïques électrochimiques, ou d'une combinaison de telles cellules, chaque cellule comportant au moins deux cavités étanches superposées délimitées chacune par un cadre de scellement et remplies d'un liquide, ce procédé comportant l'étape de fabrication collective d'un lot de cellules comportant au moins trois plaques communes à toutes les cellules d'affichage et reliées entre elles par des réseaux de matière de scellement liant lesdites plaques les unes aux autres et formant les cadres de scellement qui délimitent les cavités desdites cellules, ce procédé étant caractérisé en ce que des trous de remplissage sont percés à travers les plaques de façon que chacune des cavités d'une cellule soit alimentée par un trou de remplissage différent, chacun des trous de remplissage étant en communication avec au moins deux cellules et alimentant les cavités de même niveau, c'est-à-dire comprises entre deux mêmes plaques, ou de niveaux différents de ces au moins deux cellules, lesdits trous de remplissage étant isolés de façon étanche des cavités qu'ils ne doivent pas alimenter.

Grâce à ces caractéristiques, la présente invention procure un procédé qui permet de réaliser toutes les opérations de fabrication de cellules multicouches alors que celles-ci sont encore en lots. En particulier, la présente invention permet de remplir des cellules multicouches avant leur séparation finale du batch, ce qui, on le comprendra aisément, permet de réaliser des économies substantielles. En outre, un même trou de remplissage permet de remplir au moins deux cavités de deux cellules différentes simultanément, ce qui accélère encore d'avantage le procédé de fabrication. La présente invention permet également de réaliser des cellules moins encombrantes et plus économiques à réaliser puisque seuls quatre substrats au lieu de six sont nécessaires pour réaliser, par exemple, une cellule trichrome comprenant trois couches de cristal liquide présentant des propriétés optiques différentes.

Selon une autre caractéristique de l'invention, le lot de cellules est formé d'au moins deux sous-ensembles comportant chacun deux plaques reliées entre elles par un réseau de matière de scellement formant les cadres de scellement de cellules monocouches, les au moins deux sous-ensembles de cellules monocouches étant ensuite solidarisés entre eux de façon que les cellules monocouches se trouvent superposées deux à deux et, qu'après individualisation, elles forment des cellules uniques à couches multiples.

Dans ce cas aussi, la présente invention permet de réaliser des gains de temps et d'argent importants. En effet, selon l'art antérieur, lorsque l'homme du métier voulait réaliser, par exemple une cellule à cristal liquide trichrome, à partir de cellules individuelles comprenant chacune un cristal liquide produisant des effets optiques différents, il lui fallait remplir ces cellules monocouches alors qu'elles étaient encore en lots, puis coller trois de ces lots de cellules les uns au-dessus des autres avant de pouvoir enfin individualiser lesdites cellules. Cette multiplication du nombre des opérations nécessaires pour réaliser des cellules d'affichage couleur à cristal liquide, outre le fait qu'elle entraînait des pertes de temps, présentait l'inconvénient notable d'obliger l'homme du métier à manipuler des lots de cellules déjà remplies de cristal liquide, avec les risques que cela représentait de casser un tel lot en cours de fabrication. Au contraire, grâce à la présente invention, les lots de cellules monocouches peuvent être collés les uns au-dessus des autres alors que lesdites cellules sont encore vides, puis il peut être procédé au remplissage de ces cellules.

D'autres caractéristiques et avantages de la présente invention ressortiront plus clairement de la description détaillée qui suit d'un mode de mise en oeuvre du procédé selon l'invention, cet exemple étant donné à titre purement illustratif et non limitatif seulement en liaison avec le dessin annexé sur lequel :
- la figure 1 est une vue en perspective et en transparence d'une cellule d'affichage multicouche à cristaux liquides qui peut être obtenue par le procédé selon la présente invention;
- la figure 2 est une vue partielle en perspective et en transparence de quatre plaques superposées communes à toutes les cellules d'affichage de même type que celle représentée à la figure 1;
- les figures 3 à 5 sont des vues en plan des réseaux de matière de scellement délimitant les cavités à remplir entre les première et seconde plaques, entre les deuxième et troisième plaques, et entre les troisième et quatrième plaques;
- la figure 6 est une vue en plan d'un réseau de matière de scellement délimitant les cavités à remplir entre les différentes plaques, des trous pour le remplissage d'une matière de scellement liquide étant prévus;
- la figure 7 est une vue en plan d'un réseau de matière de scellement délimitant des cellules de forme triangulaire;
- la figure 8 est une vue en plan d'un réseau de matière de scellement 8délimitant des cellules de forme hexagonale, et
- la figure 9 est une vue en perspective d'un lot de cellules multicouches formé par la réunion de trois sous-ensembles de cellules à couche active unique.

La présente invention procède de l'idée générale inventive qui consiste à prévoir, dans un ensemble de substrats reliés deux à deux par des réseaux de matière de scellement qui forment les cadres de scellement de cellules à plusieurs couches actives, des trous de remplissage qui vont permettre de venir alimenter en liquide les couches de même niveau d'au moins deux cellules distinctes. Grâce à ces caractéristiques, il est ainsi possible de remplir sans difficulté les couches, par exemple d'une cellule couleur comprenant trois cristaux liquides ayant des propriétés optiques différentes, et ce alors même que la cellule est encore en batch. Les risques de pollution d'un cristal liquide par un autre sont ainsi évités, et le procédé de fabrication de cellules à cristal liquide s'en trouve grandement facilité et est donc moins coûteux à mettre en oeuvre. Au choix, les trous de remplissage pourront être percés dans les plaques avant que celles-ci ne soient assemblées ou seront percés à travers les plaques alors que celles-ci sont déjà assemblées.

La présente invention va être décrite en liaison avec une cellule d'affichage multicouche du type à cristaux liquides. Il va bien entendu de soi que la présente invention n'est pas limitée à un tel type de cellule et qu'elle s'applique de manière identique à tout type de cellule multicouche renfermant entre ses substrats une matière sensible qui peut changer de propriétés physiques, notamment optiques, sous l'effet d'une tension appliquée aux électrodes, ou de propriétés électriques sous l'effet d'un rayonnement lumineux incident. En particulier, la présente invention s'applique aux cellules photovoltaïques électrochimiques telles que décrites dans la demande internationale WO 99/41 638 au nom de la Demanderesse qui est incluse ici à titre de référence. De même, la présente invention s'applique à une combinaison d'une cellule à cristal liquide et d'une cellule photovoltaïque du type précisé ci-dessus.

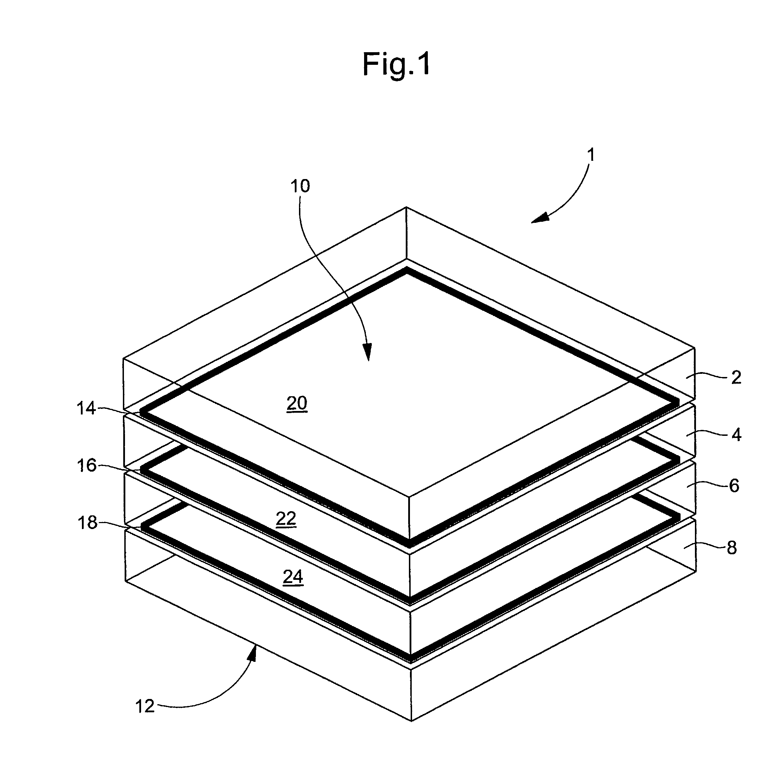

La figure 1 est une vue en perspective et en transparence d'une cellule d'affichage multicouche à cristaux liquides du type pouvant être obtenu par la mise en oeuvre du procédé conforme à la présente invention. Désignée dans son exemple par la référence numérique générale 1, cette cellule d'affichage comprend quatre substrats superposés 2, 4, 6 et 8 qui peuvent être réalisés en verre ou en un autre matériau transparent tel que du plastique. On notera que le dernier substrat 8 peut être transparent ou non selon que la cellule d'affichage 1 est réflective ou transmissive. La surface supérieure 10 du premier substrat 2 et la surface inférieure 12 du dernier substrat 8 constituent les faces externes de ladite cellule 1.

Les substrats 2 à 8 sont réunis deux à deux par des cadres de scellement 14, 16 et 18 qui délimitent chacun une cavité étanche, respectivement 20, 22 et 24, pour le confinement de cristaux liquides qui peuvent avoir des propriétés optiques différentes vis-à-vis de la lumière, par exemple réfléchir respectivement le bleu, le vert et le rouge pour former un affichage couleur. Plus précisément, le premier cadre de scellement 14 réunit les substrats 2 et 4, le deuxième cadre de scellement 16 réunit les substrats 4 et 6, et le troisième cadre de scellement 18 réunit les substrats 6 et 8.

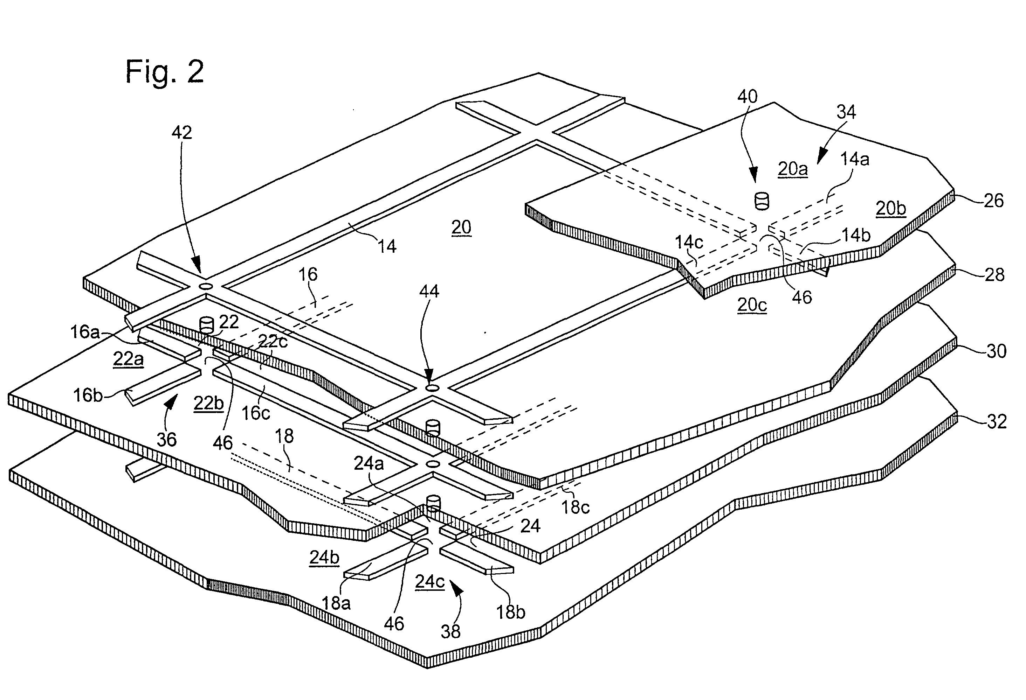

La cellule d'affichage 1 décrite ci-dessus est représentative du type de cellule qu'il est possible d'obtenir par la mise en oeuvre du procédé conforme à la présente invention comme cela va ressortir de la description qui suit faite en liaison avec les figures 2 et suivantes.

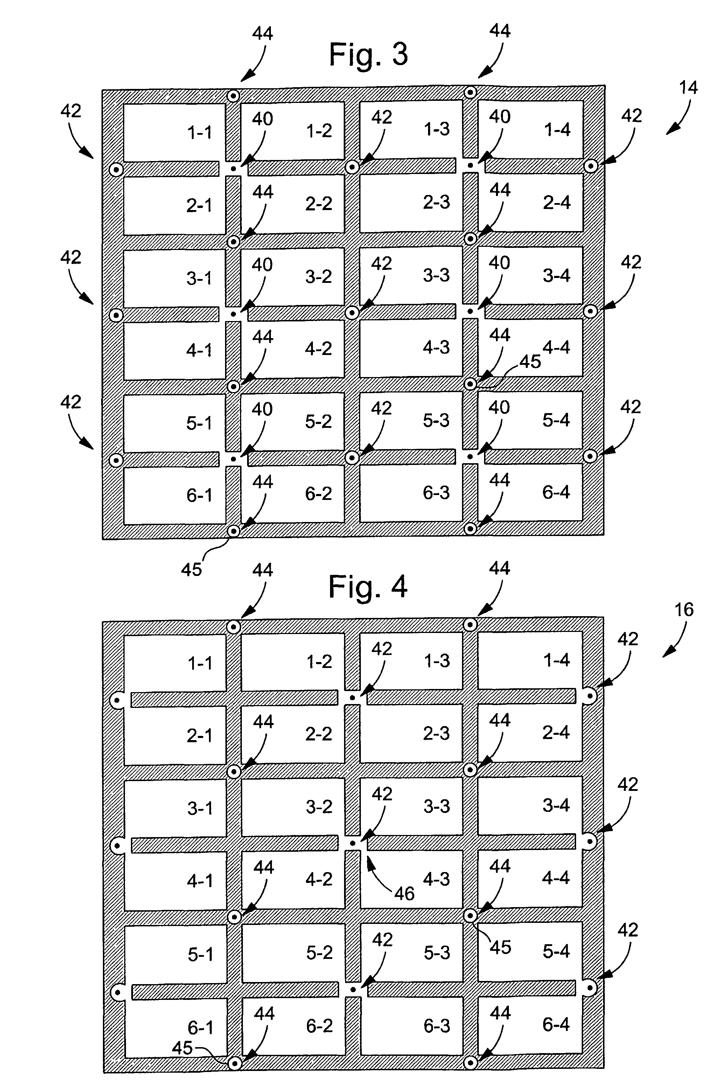

La figure 2 est une vue partielle en perspective et en éclaté de quatre plaques superposées 26, 28, 30 et 32 communes à toutes les cellules d'affichage 1 comme cela peut être vu notamment sur la figure 3. Les plaques 26, 28, 30 et 32 peuvent être réalisées en verre ou en un matériau synthétique transparent tel que du plastique. Des réseaux de matière de scellement 34, 36 et 38 lient les plaques 26, 28, 30 et 32 entre elles et forment les cadres de scellement 14, 16 et 18 qui vont délimiter chacun une cavité étanche 20, 22 et 24 pour le confinement d'un cristal liquide.

On a représenté sur la figure 2 l'amorce des cadres de scellement des cellules voisines. Ainsi, des cadres de scellement 14a, 14b et 14c s'étendent à proximité du cadre de scellement 14, entre les plaques 26 et 28, et définissent le premier niveau de remplissage des cellules formées conjointement par la réunion ultérieure des plaques 26, 28, 30 et 32. De même, des cadres de scellement 16a, 16b et 16c s'étendent à proximité du cadre de scellement 16, entre les plaques 28 et 30, et définissent le second niveau de remplissage des cellules à venir. Enfin, des cadres de scellement 18a, 18b et 18c s'étendent à proximité du cadre de scellement 18, entre les plaques 30 et 32, et définissent le troisième niveau de remplissage des cellules qui seront obtenues par individualisation du batch.

Les cadres de scellement 14a-14c, 16a-16c et 18a-18c définissent chacun une cavité étanche 20a-20c, 22a-22c et 24a-24c respectivement pour le confinement d'un cristal liquide. Comme on peut le constater à l'examen de la figure 2, toutes les cavités d'un même niveau, c'est-à-dire comprises entre deux mêmes plaques, communiquent au moins avec une autre cavité. Plus précisément, la cavité 20 communique avec les cavités 20a-20c des cellules voisines, de même que les cavités 22 et 24 communiquent avec les cavités 22a-22c et 24a-24c respectivement.

Des trous de remplissage 40, 42 et 44 permettent de remplir les couches de même niveau d'au moins deux cellules différentes. Ainsi, le premier trou de remplissage 40, percé à travers la première plaque 26 en dehors du périmètre des cadres de scellement des cellules, communique avec les cavités 20, 20a-20c délimitées par les première et seconde plaques 26 et 28 et par les cadres de scellement 14, 14a-14c. De même, le second trou de remplissage 42, percé à travers les première et seconde plaques 26 et 28 en dehors du périmètre des cadres de scellement des cellules, traverse de manière étanche le premier niveau de remplissage des cellules défini par les cavités 20, 20a-20c et communique avec les cavités 22, 22a-22c délimitées par les seconde et troisième plaque 28 et 30 et par les cadres de scellement 16, 16a-16c. Enfin, le troisième trou de remplissage 44, percé à travers les première, seconde et troisième plaques 26, 28 et 30 en dehors du périmètre des cadres de scellement des cellules, traverse de manière étanche les premier et second niveaux de remplissage des cellules définis respectivement par les cavités 20, 20a-20c et 22, 22a-22c et communique avec les cavités 24, 24a-24c délimitées par les troisième et quatrième plaques 30 et 32 et par les cadres de scellement 18, 18a-18c.

Comme on le comprendra au vu de ce qui vient d'être décrit, chacune des cavités d'une même cellule est alimentée par un trou de remplissage différent, et chaque trou de remplissage communique avec les cavités de même niveau, c'est-à-dire comprises entre deux mêmes plaques, ou de niveaux différents d'au moins deux cellules différentes, ces trous de remplissage, ménagés dans les plaques de verre ou de plastique de façon à déboucher en dehors du périmètre des cadres de scellement des cellules, étant donc isolés de façon étanche vis-à-vis des cavités qu'ils ne doivent pas alimenter.

Pour éviter que le cristal liquide ne vienne s'infiltrer entre les deux plaques d'un niveau qu'il n'est pas destiné à remplir, on peut prévoir de ménager des cloisons 45, également réalisées en matière de scellement, qui auront par exemple une forme circulaire et qui vont assurer la continuité entre les perçages ménagés dans deux plaques successives.

Lorsqu'un trou de remplissage, par exemple le troisième 44, atteint les cavités 24, 24a-24c qu'il doit permettre de remplir après avoir successivement traversé de manière étanche les premier et second niveaux du lot de cellules, il débouche dans une chambre 46 de répartition du cristal liquide, également réalisée en matière de scellement, qui permet de diriger le cristal liquide vers les cavités 24, 24a-24c à remplir.

On se réfère maintenant aux figures 3 à 5 qui sont des vues en plan des réseaux de matière de scellement délimitant les cavités à remplir et compris respectivement entre les première et deuxième plaques, entre les deuxième et troisième plaques, et entre les troisième et quatrième plaques. On a représenté au dessin un lot de vingt quatre cellules. Il va de soi que cet exemple est donné à titre purement illustratif seulement et que le nombre et la forme des cellules qui constituent le lot n'a aucune influence sur la mise en oeuvre du procédé selon l'invention. Les cellules représentées au dessin sont de forme rectangulaire et sont disposées selon un arrangement de six lignes et de quatre colonnes. C'est pourquoi, dans ce qui va suivre, on appellera cellule i-j la cellule située à l'intersection de la i-ème ligne et de la j-ème colonne.

Plusieurs trous de remplissage 40 sont visibles sur la figure 3. On rappelle que ces trous de remplissage 40, percés à travers la première plaque 26 en dehors du périmètre des cadres de scellement des cellules, communiquent avec les cavités du premier niveau délimitées par les première et seconde plaques 26 et 28. C'est ainsi que l'un de ces trous de remplissage 40 permet de remplir simultanément le premier niveau des quatre cellules 1-1, 1-2, 2-1 et 2-2. De même, un autre de ces trous de remplissage 40 permet de remplir simultanément le premier niveau des quatre cellules 5-3, 5-4, 6-3 et 6-4. Les multiples trous de remplissage 40 communiquent chacun avec une chambre 46 de répartition du cristal liquide qui débouche dans les cavités à remplir.

On peut également voir sur la figure 3 plusieurs trous de remplissage 42. On rappelle que ces trous de remplissage 42, percés à travers les première et seconde plaques 26 et 28 en dehors du périmètre des cadres de scellement des cellules, communiquent avec les cavités du second niveau délimitées par les seconde et troisième plaques 28 et 30. C'est ainsi que l'un de ces trous de remplissage 42, ménagé le long d'un bord du lot de cellules, va permettre de remplir simultanément le second niveau des cellules 1-1 et 2-1. De même, un autre de ces trous de remplissage 42 va permettre de remplir simultanément le second niveau des cellules 3-2, 3-3, 4-2 et 4-3. On notera toutefois que, comme la figure 3 est une vue en plan du réseau de matière de scellement compris entre les première et deuxième plaques 26 et 28, les trous de remplissage 42 ne communiquent pas avec les cavités à remplir de ce premier niveau. C'est pourquoi, sur la figure 3, les trous de remplissage 42 sont entourés chacun d'une cloison 45 qui permet auxdits trous de remplissage de traverser de manière étanche l'espace libre entre lesdites première et deuxième plaques 26 et 28.

On peut enfin voir sur la figure 3 plusieurs trous de remplissage 44. On rappelle que ces trous de remplissage 44, percés à travers les première, seconde et troisième plaques 26, 28 et 30 en dehors du périmètre des cadres de scellement des cellules, communiquent avec les cavités du troisième niveau délimitées par les troisième et quatrième plaques 30 et 32. C'est ainsi que l'un de ces trous de remplissage 44, ménagé le long de l'un des bords du lot de cellules, va permettre de remplir simultanément le troisième niveau des cellules 6-1 et 6-2. De même, un autre de ces trous de remplissage 44 va permettre de remplir simultanément le troisième niveau des cellules 2-3, 2-4, 3-3 et 3-4. On notera que, pour les mêmes raisons que celles exposées ci-dessus en liaison avec les trous de remplissage 42, les trous de remplissage 44 ne communiquent pas avec les cavités délimitées par les première et seconde plaques 26 et 28 et sont donc entourés chacun d'une cloison 45 qui leur permet de traverser de manière étanche l'espace libre entre ces deux plaques 26 et 28.

La figure 4 est une vue en plan du réseau de matière de scellement qui réunit des seconde et troisième plaques 28 et 30 et qui délimite les cavités destinées à être remplies d'un cristal liquide pour former le deuxième niveau des cellules d'affichage.

En premier lieu, on remarque que les trous de remplissage 40 qui permettent de remplir le premier niveau des cellules ne sont pas représentés puisque ces trous 40 sont percés uniquement dans la première plaque 26 et que cette première plaque n'est pas représentée sur la figure 4. Par contre, on peut voir que les trous de remplissage 42 débouchent tous sur des chambres 46 de répartition du cristal liquide qui permet de conduire ledit cristal liquide jusqu'aux cavités à remplir. C'est ainsi qu'en considérant à nouveau les mêmes trous de remplissage 42 que ceux mentionnés en liaison avec la figure 3, on voit que l'un de ces trous permet de remplir simultanément le second niveau des cellules 1-1 et 2-1 et qu'un autre trou permet de remplir simultanément le second niveau des cellules 3-2, 3-3, 4-2 et 4-3. Enfin, les trous de remplissage 44 qui permettent de remplir le troisième niveau des cellules sont entourés chacun d'une cloison 45 qui leur permet de traverser de manière étanche l'espace libre entre les plaques 28 et 30.

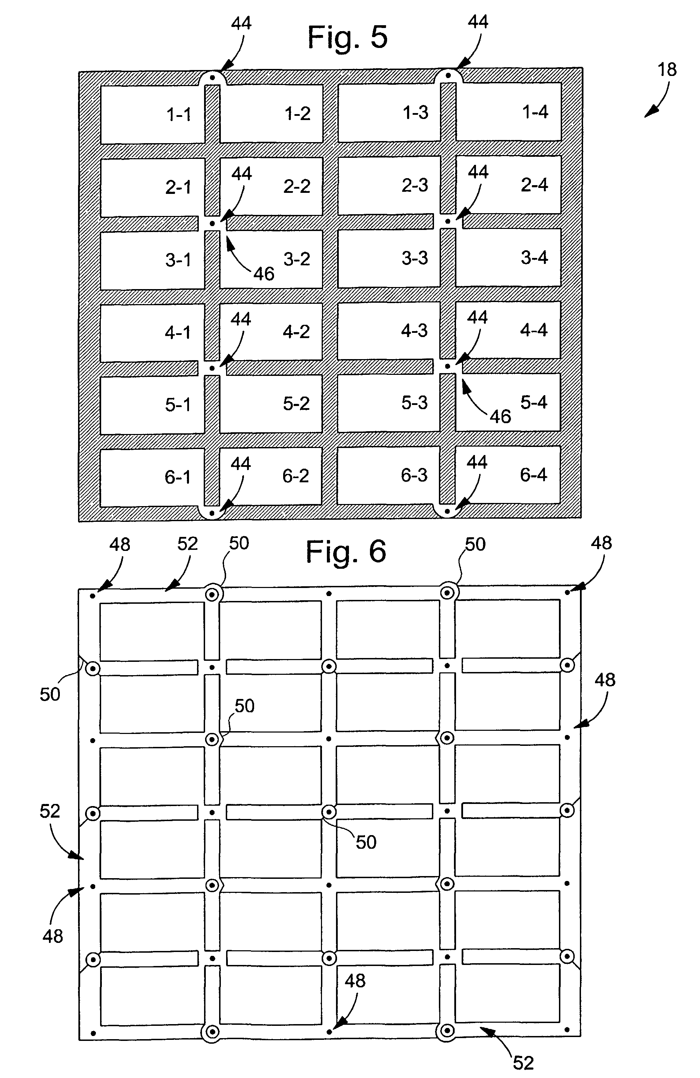

On se réfère enfin à la figure 5 qui est une vue en plan du réseau de matière de scellement qui réunit les troisième et quatrième plaques 30 et 32 et qui délimite les cavités destinées à être remplies d'un cristal liquide pour former le troisième niveau des cellules d'affichage.

En premier lieu, on remarquera que les trous de remplissage 40 et 42 qui permettent de remplir respectivement le premier et le second niveaux des cellules ne sont pas représentés puisque ces trous 40 et 42 sont percés uniquement dans les première et seconde plaques 26 et 28 et que ces plaques ne sont pas représentées sur la figure 5. Par contre, on peut voir que les trous de remplissage 44 débouchent tous sur des chambres 46 de répartition du cristal liquide qui permettent de conduire ledit cristal liquide jusqu'aux cavités à remplir. C'est ainsi qu'en considérant à nouveau les mêmes trous de remplissage 44 que ceux mentionnés en liaison avec la figure 3, on voit que l'un de ces trous permet de remplir simultanément le troisième niveau des cellules 6-1 et 6-2, tandis qu'un autre trou permet de remplir le troisième niveau des cellules 2-3, 2-4, 3-3 et 3-4.

On comprendra, au regard de ce qui vient d'être décrit, que chacun des niveaux d'une cellule est en communication avec un trou différent, chaque trou permettant d'alimenter les couches de même niveau d'au moins deux cellules différentes, les trous étant agencés dans les plaques de façon que toutes les couches de toutes les cellules soient alimentées en cristal liquide.

Après remplissage, on scelle les cellules en remplissant les ouvertures de remplissage à l'aide de matière de scellement, puis on individualise les cellules par toute technique de découpage appropriée.

Additionnellement, des trous supplémentaires 48 (voir figure 6) peuvent être percés à travers les trois plaques 26, 28 et 30 pour permettre d'amener une matière de scellement liquide qui va se répandre tout autour des cadres de scellement des cellules sur les trois niveaux et qui sera durcie ultérieurement par exemple par chauffage. On peut ainsi réaliser des cadres de scellement plus minces et apporter de la matière de scellement originellement à l'état liquide pour réaliser le surcroît d'épaisseur. L'un des avantages de ce mode de réalisation est qu'il permet d'enrober à l'aide de la matière de scellement liquide des structures fragiles déposées préalablement à la réalisation du mur de scellement.

On remarquera sur la figure 6 la présence d'éléments de cloison 50 qui sont destinés à délimiter des canaux 52 pour le remplissage de la matière de scellement liquide. Ces canaux 52 sont en communication directe avec les trous 48 d'amenée de la matière de scellement liquide et permettent avantageusement de limiter la distance que cette matière doit parcourir lorsqu'elle est introduite entre deux plaques successives, permettant ainsi un remplissage homogène.

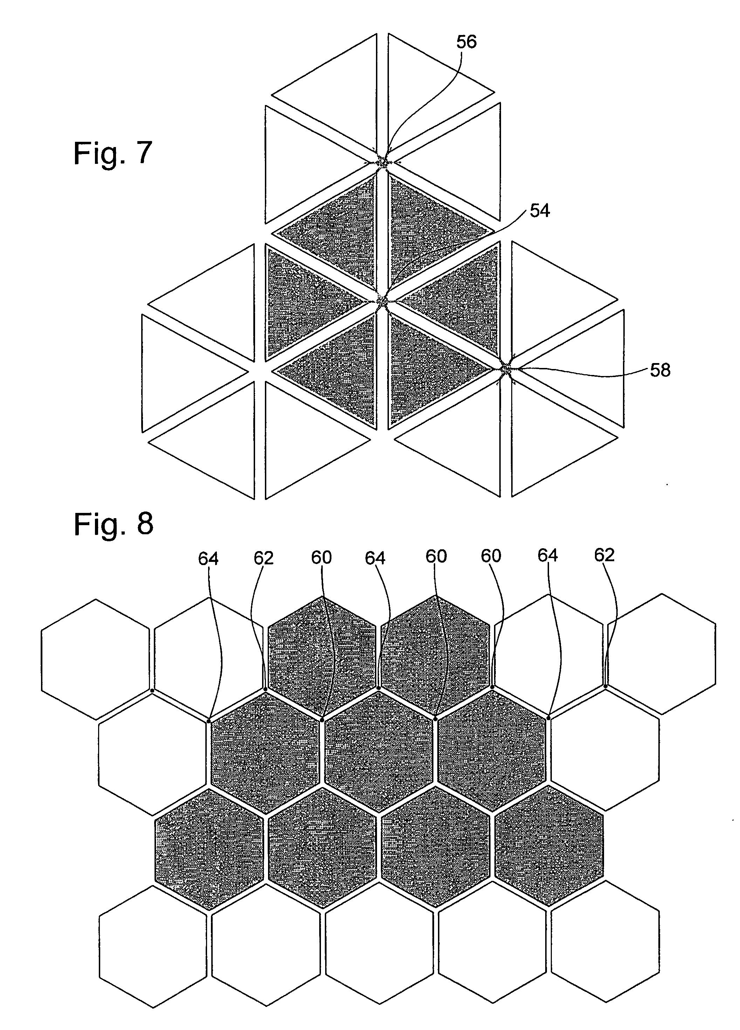

Sur les figures précédentes, on a représenté des cellules de forme rectangulaire. Bien entendu, les cellules peuvent s'écarter de cette forme et présenter un aspect par exemple triangulaire (voir figure 7), des trous de remplissage 54, 56 et 58 étant prévus à chaque sommet des triangles pour remplir à chaque fois les six couches de même niveau de six cellules différentes. Selon encore une autre variante, les cellules peuvent avoir une forme hexagonale (voir figure 8), des trous de remplissage 60, 62 et 64 judicieusement disposés permettant, là aussi, de remplir les trois couches de toutes les cellules.

Il va de soi que la présente invention n'est pas limitée aux modes de réalisation qui vient d'être décrit, et que diverses modifications et variantes simples peuvent être envisagées par l'homme du métier sans sortir du cadre de la présente invention. En particulier, il n'est pas nécessaire que les trous de remplissage soient ménagés au point de concours de deux côtés d'une cellule. En effet, les trous de remplissage peuvent également être pratiqués en un endroit de la longueur d'un côté d'une cellule.

De même, il n'est pas nécessaire que tous les trous de remplissage soient pratiqués du même côté de l'ensemble de cellules.

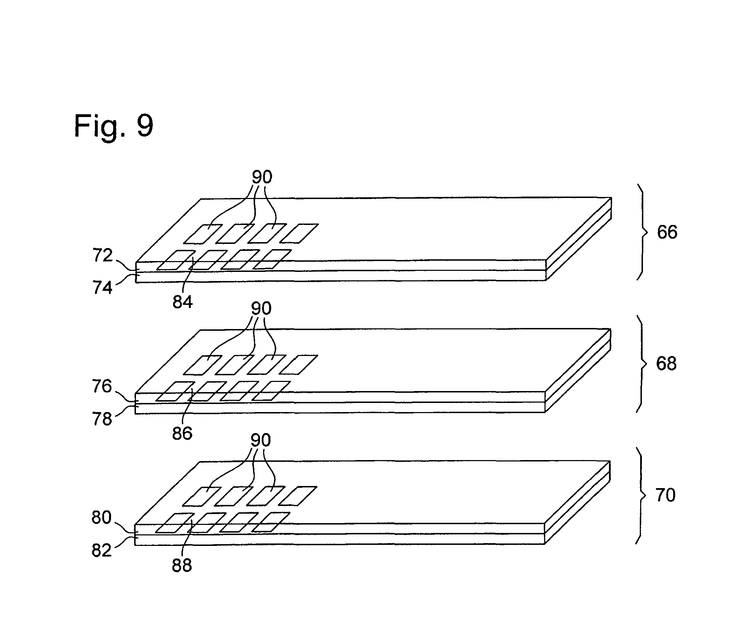

Dans tout ce qui précède, on s'est référé à une cellule à trois niveaux de cristal liquide comprenant quatre substrats 2, 4, 6 et 8, ce qui signifie que les substrats intermédiaires 4 et 6 sont encadrés par les substrats supérieur et inférieur 2 et 8 et sont donc chacun communs à deux niveaux de la cellule, c'est-à-dire qu'ils portent des électrodes sur leurs deux faces. On peut toutefois également envisager d'appliquer le présent procédé à une cellule multicouche, par exemple trichrome, formée de cellules individuelles comprenant chacune un cristal liquide produisant des effets optiques différents. A cet effet, il est possible (voir figure 9) de former trois sous-ensembles 66, 68 et 70 comportant chacun deux plaques respectivement 72, 74, 76, 78 et 80, 82 reliées entre elles par un réseau de matière de scellement 84, 86 et 88 formant les cadres de scellement de cellules monocouches 90. Avant d'apparier ces plaques par paires, on prendra soin, conformément à l'invention, de percer dans lesdites plaques des trous de remplissage qui permettront de remplir simultanément les différents niveaux des cellules après assemblage des trois sous-ensembles. Finalement, les trois sous-ensembles sont collés de façon que les cellules monocouches délimitées par ces trois sous-ensembles se trouvent superposées et, qu'après remplissage et individualisation, elles forment des cellules individuelles comprenant chacune trois couches d'agent actif.

## Revendications

1. Procédé de fabrication d'une pluralité de cellules multicouches, notamment de cellules d'affichage à cristaux liquides (1), ou de cellules photovoltaïques électrochimiques, ou d'une combinaison de telles cellules, chaque cellule (1) comportant au moins deux cavités étanches (20, 22, 24) superposées délimitées chacune par un cadre de scellement (14, 16, 18) et remplies d'un liquide, ce procédé comportant l'étape de fabrication collective d'un lot de cellules (1) comportant au moins trois plaques (26, 28, 30, 32) communes à toutes les cellules d'affichage (1) et reliées entre elles par des réseaux de matière de scellement (34, 36, 38) liant lesdites plaques (26, 28, 30, 32) les unes aux autres et formant les cadres de scellement (14, 14a-14c; 16, 16a-16c; 18, 18a-18c) qui délimitent les cavités (20, 20a-20c; 22, 22a-22c; 24, 24a-24c) desdites cellules (1),
ce procédé étant **caractérisé en ce que** des trous de remplissage (40, 42, 44) sont percés à travers les plaques (26, 28, 30) de façon que chacune des cavités (20, 22, 24; 20a, 22a, 24a; 20b, 22b, 24b; 20c, 22c, 24c) d'une cellule soit alimentée par un trou de remplissage différent, chacun des trous de remplissage (40, 42, 44) étant en communication avec au moins deux cellules et alimentant les cavités (20, 20a-20c; 22, 22a-22c; 24, 24a-24c) de même niveau, c'est-à-dire comprises entre deux mêmes plaques, ou de niveaux différents de ces au moins deux cellules, lesdits trous de remplissage (40, 42, 44) étant isolés de façon étanche des cavités qu'ils ne doivent pas alimenter.

2. Procédé selon la revendication 1, **caractérisé en ce que** le lot de cellules est formé d'au moins deux sous-ensembles (66, 68, 70) comportant chacun deux plaques (72, 74; 76, 78; 80, 82) reliées entre elles par un réseau de matière de scellement (84, 86, 88) formant les cadres de scellement de cellules monocouches (90), les au moins deux sous-ensembles de cellules monocouches étant ensuite solidarisés entre eux de façon que les cellules monocouches (90) se trouvent superposées deux à deux et, qu'après individualisation, elles forment des cellules uniques (1) à couches multiples.

3. Procédé selon l'une quelconque des revendications 1 ou 2, **caractérisé en ce que** les trous de remplissage sont percés dans les plaques avant que celles-ci ne soient assemblées.

4. Procédé selon l'une quelconque des revendications 1 ou 2, **caractérisé en ce que** les trous de remplissage sont percés à travers les plaques alors que celles-ci sont déjà assemblées.

5. Procédé selon l'une quelconque des revendications 1 à 4, **caractérisé en ce que** les trous de remplissage (40, 42, 44) sont entourés chacun d'une cloison (45) qui leur permet de traverser de manière étanche l'espace libre entre deux plaques (26, 26, 30, 32) successives.

6. Procédé selon l'une quelconque des revendications 1 à 5, **caractérisé en ce que** les trous de remplissage (40, 42, 44) communiquent chacun avec une chambre (46) de répartition du cristal liquide qui permet de conduire ledit cristal liquide jusqu'aux cavités à remplir.

7. Procédé selon l'une quelconque des revendications 1 à 6, **caractérisé en ce que** les trous de remplissage (40, 42, 44) sont percés à travers les plaques (26, 28, 30) en dehors du périmètre des cadres de scellement des cellules.

8. Procédé selon l'une quelconque des revendications 1 à 7, **caractérisé en ce qu'**au moins certains des trous de remplissage (40, 42, 44) sont percés sur l'arrière du lot de cellules (1).

## Patentansprüche

1. Verfahren zum Herstellen mehrerer mehrlagiger Zellen, insbesondere von Flüssigkristall-Anzeigezellen (1) oder elektrochemischen photovoltaischen Zellen, oder einer Kombination solcher Zellen, wobei jede Zelle (1) wenigstens zwei übereinander angeordnete dichte Hohlräume (20, 22, 24) umfasst, die jeweils durch einen Einkapselungsrahmen (14, 16, 18) begrenzt und mit einer Flüssigkeit befüllt sind, wobei das Verfahren den Schritt des gemeinsamen Herstellens eines Stapels von Zellen (1) umfasst, der wenigstens drei allen Anzeigezellen (1) gemeinsame Platten (26, 28, 30, 32), die miteinander über Einkapselungsmaterial-Gitter (34, 36, 38), die die Platten (26, 28, 30, 32) miteinander verbinden und die die Hohlräume (20, 20a-20c; 22, 22a-22c; 24, 24a-24c) der Zellen (1) begrenzenden Einkapselungsrahmen (14, 14a-14c; 16, 16a-16c; 18, 18a-18c) bilden, miteinander verbinden,
wobei dieses Verfahren **dadurch gekennzeichnet ist, dass** durch die Platten (26, 28, 30) Befüllungslöcher (40, 42, 44) in der Weise gebohrt werden, dass jeder der Hohlräume (20, 22, 24; 20a, 22a, 24a; 20b, 22b, 24b; 20c, 22c, 24c) einer Zelle durch ein unterschiedliches Befüllungsloch versorgt wird, wobei jedes der Befüllungslöcher (40, 42, 44) mit wenigstens zwei Zellen in Verbindung steht und die Hohlräume (20, 20a-20c; 22, 22a-22c; 24, 24a-24c) derselben Ebene, d. h. Hohlräume zwischen zwei gleichen Platten, oder unterschiedlicher Ebenen dieser wenigstens zwei Zellen versorgt, wobei die Befüllungslöcher (40, 42, 44) von den Hohlräumen, die sie nicht versorgen sollen, dicht isoliert sind.

2. Verfahren nach Anspruch 1, **dadurch gekennzeichnet, dass** der Stapel von Zellen aus wenigstens zwei Untereinheiten (66, 68, 70) gebildet wird, die jeweils zwei Platten (72, 74; 76, 78; 80, 82) umfassen, die durch ein Einkapselungsmaterial-Gitter (84, 86, 88) miteinander verbunden sind und die Einkapselungsrahmen einlagiger Zellen (90) bilden, wobei die wenigstens zwei Untereinheiten von einlagigen Zellen anschließend aneinander befestigt werden, derart, dass die einlagigen Zellen paarweise überlagert sind, und derart, dass sie nach der Individualisierung einzelne Zellen (1) mit mehreren Lagen bilden.

3. Verfahren nach einem der Ansprüche 1 oder 2, **dadurch gekennzeichnet, dass** die Befüllungslöcher in die Platten gebohrt werden, bevor diese zusammengefügt werden.

4. Verfahren nach einem der Ansprüche 1 oder 2, **dadurch gekennzeich** **net, dass** die Befüllungslöcher durch die Platten gebohrt werden, wenn diese bereits zusammengefügt worden sind.

5. Verfahren nach einem der Ansprüche 1 bis 4, **dadurch gekennzeichnet, dass** die Befüllungslöcher (40, 42, 44) jeweils von einer Trennwand (45) umgeben sind, die ihnen ermöglicht, den freien Raum zwischen zwei aufeinander folgenden Platten (26, 28, 30, 32) dicht zu durchqueren.

6. Verfahren nach einem der Ansprüche 1 bis 5, **dadurch gekennzeichnet, dass** die Befüllungslöcher (40, 42, 44) jeweils mit einer Flüssigkristall-Verteilungskammer (46) in Verbindung stehen, die ermöglicht, den Flüssigkristall bis zu den zu befüllenden Hohlräumen zu führen.

7. Verfahren nach einem der Ansprüche 1 bis 6, **dadurch gekennzeichnet, dass** die Befüllungslöcher (40, 42, 44) durch die Platten (26, 28, 30) außerhalb des Umfangs der Einkapselungsrahmen der Zellen gebohrt werden.

8. Verfahren nach einem der Ansprüche 1 bis 7, **dadurch gekennzeichnet, dass** wenigstens Bestimmte der Befüllungslöcher (40, 42, 44) an der Rückseite des Stapels von Zellen (1) gebohrt werden.

## Claims

1. Method for manufacturing a plurality of multi-layered cells, particularly liquid crystal display cells (1), or electrochemical photovoltaic cells, or a combination of such cells, each cell (1) including at least two superposed sealed cavities (20, 22, 24) each delimited by a sealing frame (14, 16, 18) and filled with a liquid, this method comprising the step of collectively manufacturing a batch of cells (1) including at least three plates (26, 28, 30, 32) common to all the display cells (1) and connected to each other by patterns of sealing material (34, 36, 38) connecting said plates (26, 28, 30, 32) to each other and forming the sealing frames (14, 14a-14c; 16, 16a-16c; 18, 18a-18c) which delimit the cavities (20, 20a-20c; 22, 22a-22c; 24, 24a-24c) of said cells (1),
this method being **characterised in that** filling holes (40, 42, 44) are pierced through the plates (26, 28, 30) such that each of the cavities (20, 22, 24, 20a, 22a, 24a; 20b, 22b, 24b; 20c, 22c, 24c) of a cell is fed by a different filling hole, each of the filling holes (40, 42, 44) being in communication with at least two cells and feeding the cavities (20, 20a-20c; 22, 22a-22c; 24, 24a-24c) of the same level, i.e. comprised between the same two plates, or of different levels of these at least two cells, said filling holes (40, 42, 44) being isolated in a sealed manner from the cavities that they must not feed.

2. Method according to claim 1, **characterised in that** the batch of cells is formed of at least two sub-assemblies (66, 68, 70) each comprising two plates (72, 74; 76, 78; 80, 82) connected to each other by a pattern of sealing material (84, 86, 88) forming the sealing frames of single-layer cells (90), the at least two single-layer cell sub-assemblies being then secured to each other such that the single-layer cells (90) are superposed in pairs and, after separation, they form single cells (1) with multiple layers.

3. Method according to any one of claims 1 or 2, **characterised in that** the filling holes are pierced in the plates before the latter are assembled.

4. Method according to any one of claims 1 or 2, **characterised in that** the filling holes are pierced through the plates when the latter are already assembled.

5. Method according to any one of claims 1 to 4, **characterised in that** the filling holes (40, 42, 44) are each surrounded by a wall (45), which allows them to pass through the free space between two successive plates (26, 28, 30, 32) in a sealed manner.

6. Method according to any one of claims 1 to 5, **characterised in that** the filling holes (40, 42, 44) each communicate with a liquid crystal distribution chamber (46) which leads said liquid crystal to the cavities to be filled.

7. Method according to any one of claims 1 to 6, **characterised in that** the filling holes (40, 42, 44) are pierced through the plates (26, 28, 30) outside the perimeter of the sealing frames of the cells.

8. Method according to any one of claims 1 to 7, **characterised in that** at least certain filling holes (40, 42, 44) are pierced in the back of the batch of cells (1).
